Europäisches Patentamt

European Patent Office

Office européen des brevets

(19)

(11) **EP 0 690 394 A1**

(12) **DEMANDE DE BREVET EUROPEEN**

(43) Date de publication:
**03.01.1996 Bulletin 1996/01**

(51) Int Cl.[6]: **G06F 17/30**, G06F 17/60

(21) Numéro de dépôt: **95401530.1**

(22) Date de dépôt: **27.06.1995**

(84) Etats contractants désignés:
**DE FR GB**

(30) Priorité: **28.06.1994 FR 9407909**

(71) Demandeur: **BULL S.A.**
**F-78430 Louveciennes (FR)**

(72) Inventeurs:
• **Geymond, Jean-Paul**
**F-92140 Clamart (FR)**
• **Paltrinieri, Massimo**
**F-75004 Paris (FR)**

(74) Mandataire: **Debay, Yves**
**F-78170 La Celle Saint Cloud (FR)**

(54) **Procédé et dispositif de génération automatique de feuilles de calcul**

(57) L'invention concerne un procédé de génération automatique de feuilles de calcul à partir d'un modèle du type entité-relation qui sert de support à une base de données relationnelle. Ce modèle de base de données du type entité-relation est présenté sur un écran d'un système informatique sous la forme d'un graphe composé d'une pluralité d'entités et de relations et matérialisé en mémoire par un ensemble de tables relationnelles. Selon l'invention, une feuille de calcul est définie automatiquement par la sélection sur ce graphe des éléments devant venir composer ses données d'abscisse et d'ordonnées et le contenu des cellules ainsi formées.

FIG. 1

**Description**

La présente invention concerne un procédé et un dispositif de génération automatique de feuilles de calcul à partir de la représentation graphique d'un modèle entité-relation, par exemple de la structure d'une entreprise, supporté par une base de données relationnelle, en vue de leur utilisation dans un tableur, ce procédé et le dispositif lui étant associé facilitant par là-même la création de ces feuilles de calcul et le processus de prise de décision.

Les tableurs, présents sous de nombreuses formes logicielles, sont couramment utilisés pour leurs capacités à gérer d'importantes feuilles de calcul, comme des sortes de calculatrices évoluées. Ils sont cependant rarement mis en oeuvre pour l'aide à la prise de décision qui demande des efforts de synthèse des problèmes à résoudre ou à étudier. L'inconvénient de ces tableurs est en effet qu'ils ne permettent pas une interaction visuelle avec les données de base et les relations les liant entre elles, et ne permettent donc pas de définir des feuilles de calcul en restant proche de la structure même du domaine d'application.

On connaît par ailleurs des systèmes de gestion de base de données relationnelles (SGBDR) qui gèrent des tables contenant par exemple les données d'une entreprise. Une extension à ces SGBDR consiste en un modèle dit entité-relation (entity-relationship model) qui permet de représenter sous forme d'un graphe la structure des données mémorisées en faisant apparaître les relations sous-jacentes entre chaque type de données.

Un premier but de l'invention est de remédier à la lourdeur d'utilisation des tableurs et aux difficultés de conception d'une feuille de calcul à l'aide d'un procédé de génération automatique de feuilles de calcul simple à mettre en oeuvre et qui permette de définir facilement et visuellement les éléments à prendre en compte dans ladite feuille à l'aide de graphes du type entité-relation.

Ce but est atteint par le fait que le procédé de génération automatique de feuilles de calcul à partir d'un modèle du type entité-relation servant de support à une base de données relationnelle, ledit modèle de base de données du type entité-relation étant présenté sur un écran d'un système informatique sous la forme d'un graphe composé d'une pluralité d'entités et de relations représentées respectivement par de premier et de second types d'objets et reliées par des arcs, ce graphe étant matérialisé en mémoire par un ensemble de tables relationnelles, est caractérisé en ce que:

une feuille de calcul est définie automatiquement par la sélection sur les différents types d'objets de ce graphe des éléments devant venir composer les données d'abscisse et d'ordonnées et le contenu des cellules ainsi formées.

Selon un premier mode de mise en oeuvre du procédé selon l'invention, la sélection des éléments composant une feuille de calcul est caractérisée par :

- une première phase de sélection d'un premier ensemble d'entités tel que le chemin formé par ces entités et les relations les reliant ne comporte aucune boucle, une des extrémités de ce chemin étant désignée comme la racine et l'autre comme la branche,

- une deuxième phase de sélection d'un second ensemble d'entités reliées par des relations à la branche,

et en ce que,

- pour chacune des entités du premier ensemble, lorsqu'elle est indiquée pour sélection, une liste de ses attributs est affichée, attributs parmi lesquels au moins un est sélectionné, et que pour chacun des attributs sélectionnés les valeurs desdits attributs, extraites de la base de données sont reportées en abscisse, sur des niveaux hiérarchiques correspondant à une arborescence entre les entités des abscisses,

et en ce que,

- une liste des attributs non sélectionnés de cette entité branche et une liste des attributs des entités du second ensemble sont affichées, attributs parmi lesquels au moins un est sélectionné, que ces attributs sont reportés en ordonnées sur des niveaux hiérarchiques correspondant à une arborescence entre les entités des ordonnées, et que les cellules ainsi formées sont initialisées avec les valeurs desdits attributs, extraites de la base de données.

Selon une variante du mode de mis en oeuvre du procédé selon l'invention, il est possible de faire figurer sur le graphe les attributs des entités et relations le composant, sous la forme d'un troisième type d'objets, et de les sélectionner directement.

Selon une autre variante du mode de mise en oeuvre du procédé selon l'invention, le domaine des valeurs prises par les attributs et à reporter en abscisse peut être limité, par des choix ponctuels ou par des fonctions de limitation.

Selon une particularité du mode de mise en oeuvre du procédé selon l'invention, tous les objets formant le graphe sont au départ affichés dans une première couleur, puis, au cours de la sélection, les objets sélectionnés sont affichés dans une seconde couleur.

Selon une autre particularité du mode de mise en oeuvre du procédé selon l'invention, à tout moment des phases de sélection, les objets à même d'être sélectionnés sont affichés dans une troisième couleur.

Selon une autre particularité du mode de mise en oeuvre du procédé selon l'invention, lesdites couleurs peuvent être remplacées par des variations de brillance ou des fréquences de clignotement.

Selon une autre variante du mode de mise en oeuvre du procédé selon l'invention, la sélection est caractérisée par le fait qu'elle comporte une étape de validation de l'entité courante sélectionnée pour vérifier :

- durant la première phase, si une relation relie sur le graphe cette entité à l'entité précédemment sélectionnée, et

- dans la seconde phase, si une relation relie sur le graphe cette entité à la branche,

ces relations étant matérialisées en mémoire par des tables qui permettent d'effectuer, au niveau du SGBDR, la jointure des tables correspondant à ces entités.

Selon une autre variante du mode de mise en oeuvre du procédé, celui-ci est caractérisé par la constitution d'un historique des sélections contenant chacune des étapes de sélection et permettant de revenir en arrière pas à pas.

Selon encore une autre variante du mode de mise en oeuvre du procédé selon l'invention, ledit modèle inclut l'expression de contraintes auxquelles obéissent les différentes entités et relations le composant, et les contraintes associées aux entités et relations sélectionnées sont automatiquement liées aux cellules des feuilles de calcul ainsi générées.

Selon encore une autre particularité du mode de mise en oeuvre du procédé selon l'invention, ledit modèle est un modèle d'entreprise.

Un autre but de l'invention est de proposer un système d'aide à la prise de décision simplifiant la génération de feuilles de calcul à des fins de simulation, de représentations graphiques d'états ou d'évolution, étape déterminante dans les prévisions d'impact de décisions.

Ce but est atteint grâce à un système d'aide à la prise de décision à partir d'un modèle du domaine d'application sous une forme de graphe entité-relation contenant des entités, des relations et des contraintes qui leur sont liées comportant :

- des moyens de stockage d'une base de données décrite par ce modèle et contenant les informations correspondantes au dit domaine d'application,

- des moyens de représentation graphique à l'écran dudit graphe entité-relation, incluant des objets représentatifs des entités, des relations, des contraintes qui leur sont liées et des arcs liant ces objets entre eux,

et caractérisé par :

- des moyens d'interfaçage permettant la sélection sur le graphe des entités et des relations décrivant les éléments à mettre en cause lors de l'étude pour une prise de décision,

- des moyens de génération automatique de feuilles de calcul ayant une structure correspondant aux entités et relations sélectionnées et associant à leurs cellules les contraintes présentes dans le modèle,

- des moyens de recouvrement des valeurs contenues dans la base de données et correspondant aux éléments sélectionnés pour initialiser lesdites feuilles, et

- des moyens de conversion des feuilles créées vers le format d'un tableur en vue de leur utilisation dans ce tableur permettant la présentation des données sous forme de graphiques et des simulations respectant les contraintes, à des fins d'exploitation des données et de prévision de l'impact de décisions.

Selon une variante du système d'aide à la prise de décision selon l'invention, celui-ci comporte des moyens de sauvegarde d'un historique des sélections et des moyens d'exploitation de cet historique qui permettent de revenir pas à pas sur les sélections faites et de modifier ainsi la structure d'une feuille de calcul.

D'autres particularités et avantages de la présente invention apparaîtront plus clairement à la lecture de la description ci-après faite en référence aux dessins annexés dans lesquels :

- La Figure 1 représente un exemple simplifié d'un modèle entité-relation décrivant graphiquement la structure d'une entreprise.

- La Figure 2 représente quelques tables d'une base de données relationnelle correspondante au modèle d'entreprise de la Figure 1.

- Les Figures 3a et 3b représentent un schéma organigramme des différentes étapes de la mise en oeuvre du procédé de génération d'une feuille de calcul à partir d'un modèle entité-relation.

- Les Figures 4a à 4f représentent les résultats des étapes de création d'une feuille de calcul selon le procédé de l'invention.

- La Figure 5 représente un autre exemple de graphe entité-relation incluant des contraintes associées à des entités et à des relations.

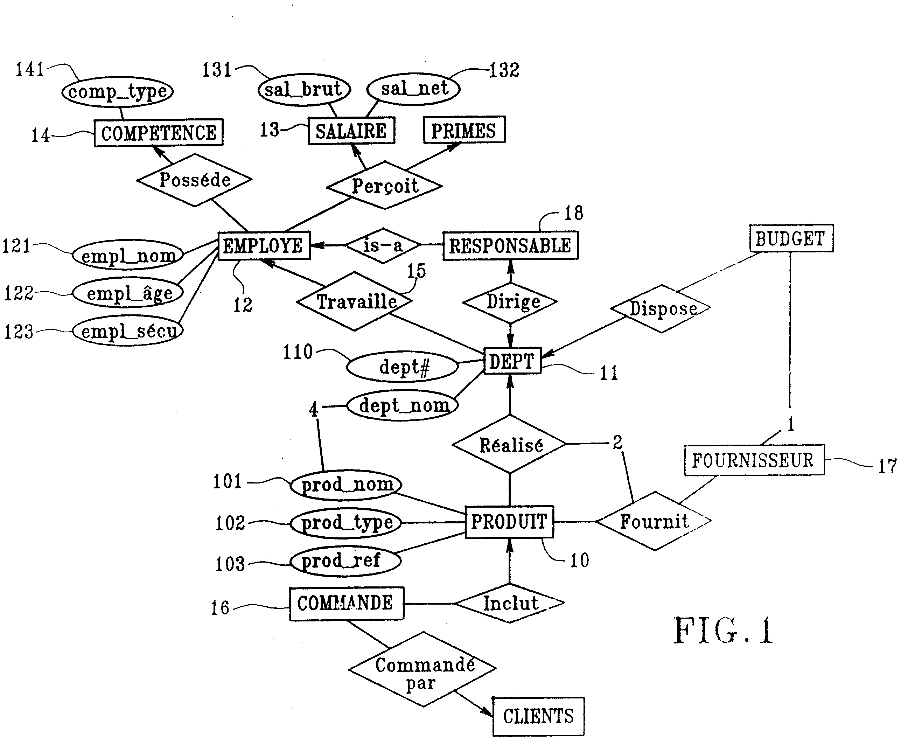

De multiples efforts ont été faits par le passé pour définir un modèle relationnel appelé entité-relation permettant de décrire plus aisément les éléments à prendre en compte dans une base de données relationnelle. La Figure 1 montre un exemple d'une telle représentation, le domaine d'application choisi étant ici une entreprise, dans laquelle les entités 1 (de forme rectangulaire) et les relations 2 (en forme de losanges) sont reliées entre elles par des arcs orientés. Les attributs 4 (de forme elliptique) concernant ces entités et relations peuvent apparaître dans le graphe. Pour plus de clarté, seuls quelques uns des attributs ont été représentés sur le graphe de la Figure 1.

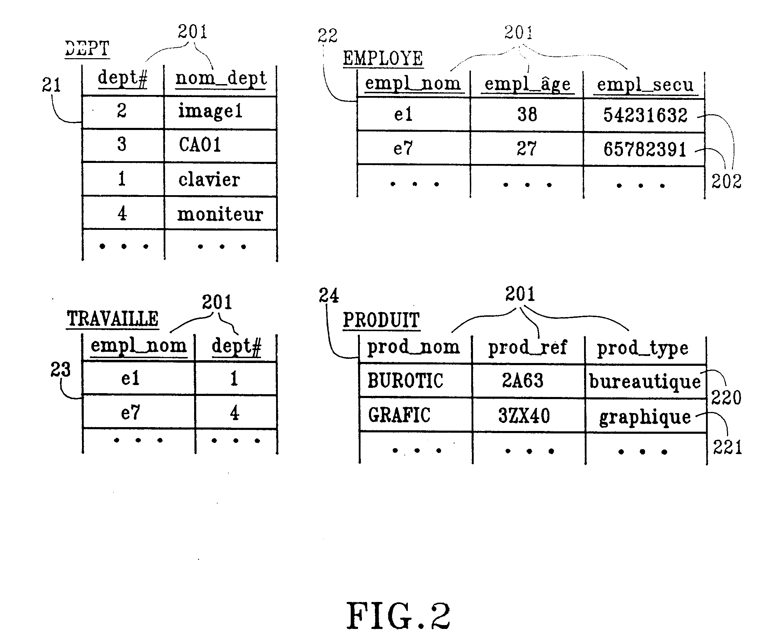

Des méthodes permettant de créer une base de données relationnelle à partir de tels graphes sont connues dans l'art antérieur, et le lecteur sera plus particulièrement renvoyé au livre de J. D. Ullman, "Principles of Database and Knowledge Base Systems", Volume 1, édité en 1988 aux éditions Computer Science Press, ces techniques étant par la suite considérées comme accessible à l'homme du métier. Une base de données relationnelle correspondant au graphe de la Figure 1 gère alors un certain de nombre de tables (nommées relations) telles que représentées sur la Figure 2 dans lesquelles les colonnes correspondent aux attributs 201 et les lignes aux n-uplets 202, appelés "tuples" en anglais. On voit par exemple qu'à l'entité DEPT (référence 11 de la Figure 1), qui représente les différents département d'une entreprise, correspond une table DEPT (référence 21 de la Figure 2), qu'à l'entité EMPLOYE (référence 12 de la Figure 1), qui représente les employés de cette entreprise, correspond une table EMPLOYE (référence 22 de la Figure 2) et qu'à la relation Travaille (référence 15 de la Figure 1), qui illustre le fait que des employés travaillent dans un département, correspond la table TRAVAILLE (référence 23 de la Figure 2). La relation DEPT 21 contient un certains nombres de n-uplets 202 ayant pour attributs 201 un numéro de département dept# et le nom de ce département dept_nom. De même pour la relation EMPLOYE 22 dont les attributs empl_nom, empl_age et empl_secu représentent respectivement, pour chaque tuple de cette relation, un nom d'employé, un âge et un numéro de sécurité sociale.

Selon un mode de mise en oeuvre du procédé selon l'invention, un menu de commandes principales comprend une option de chargement d'un modèle entité-relation qui permet de charger en mémoire le modèle avec lequel on désire travailler. Typiquement, une boîte de dialogue permet alors d'entrer le nom d'un fichier dans lequel ledit modèle est stocké sous une forme adéquate. Un graphe similaire à celui de la Figure 1 est alors affiché dans une fenêtre. Un menu comportant les options d'affichage propose alors diverses possibilités: par exemple, de cacher tous les attributs pour éviter la surcharge, ou bien de tous les afficher à l'écran afin de permettre leur sélection directe. Dans un autre mode, seuls les attributs sélectionnés durant la phase de sélection restent visibles. Les couleurs des objets représentés (sélectionnés, à même d'être sélectionnés ou inactifs) peuvent aussi être initialisées. De même, on peut permettre la navigation vers la droite, la gauche, le haut ou le bas si la taille du graphe ne permet pas de l'afficher dans son entier à l'écran. Ceci autorise une meilleure lisibilité du graphe et assure que tous ses éléments soient accessibles pour les manipulations qui permettent de créer une feuille de calcul.

Les sélections se font à l'aide d'un clavier ou d'un objet de pointage/cliquage, par exemple une souris informatique, en amenant un pointeur sur l'objet à sélectionner et en validant/cliquant. Dans un mode de mise en oeuvre, formalisé par le programme de traitement des actions de sélection, le bouton gauche de la souris sera réservé à une nouvelle sélection, alors que le bouton droit annulera les dernières opérations une à une, en remontant un historique.

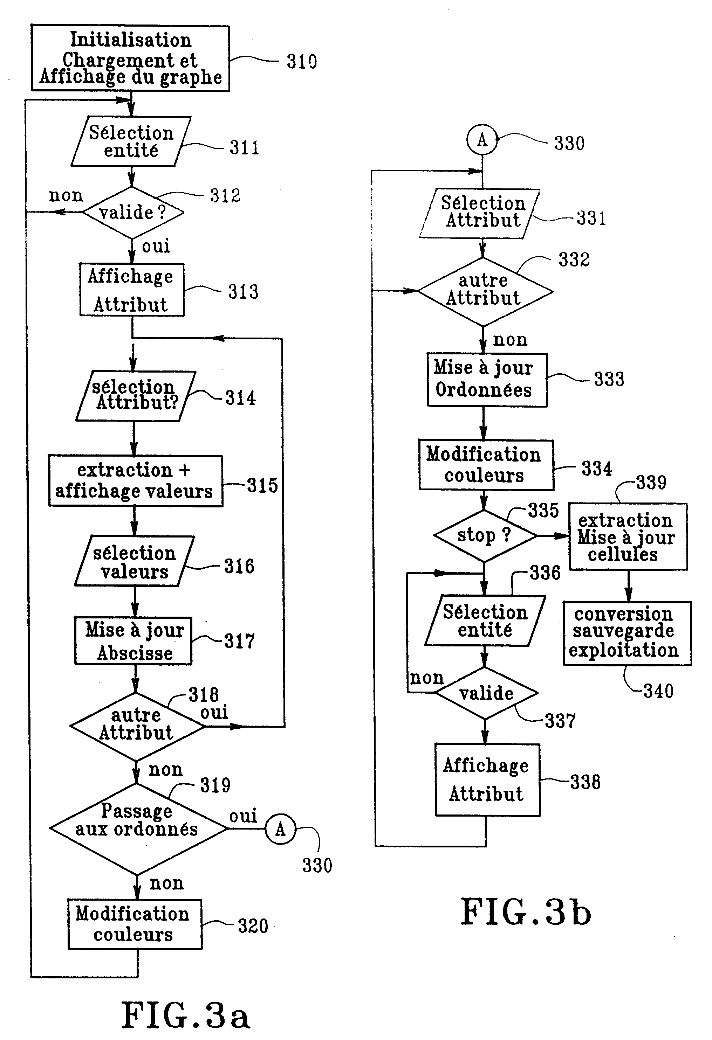

La Figure 3 décrit sous forme d'un organigramme les différentes étapes qui conduisent à la génération d'une feuille de calcul. Les parallélogrammes désignent ici les étapes de sélection d'objets. La première étape est l'initialisation du procédé pendant laquelle l'utilisateur désigne le modèle avec lequel il désire travailler et dont la représentation graphique est alors affichée dans une fenêtre. La première phase de sélection peut alors commencer.

La première entité sélectionnée à l'étape 311, est désignée comme la racine de la nouvelle feuille. Une étape de validation 312 permet de s'assurer que l'objet sélectionné est bien une entité valide comme racine au départ ou bien, à partir de la deuxième sélection, qu'elle se trouve reliée par une relation à l'entité précédemment sélectionnée. Ainsi, les éléments à reporter en abscisse comme décrit plus loin sont nécessairement liés logiquement, puisque dans leur ensemble, ils forment une chaîne ne comportant aucune boucle depuis la racine. Si l'entité sélectionnée est valide, la phase de sélection peut continuer; sinon, cette entité est rejetée et le procédé reprend à l'étape 311.

Si le mode d'affichage choisi est celui dans lequel aucun attribut n'est affiché, on passe alors à l'étape 313, qui consiste à afficher directement tous les attributs de l'entité courante auxquels l'accès est autorisé à l'utilisateur. L'affichage peut se faire en complétant le graphe comme pour les attributs figurant Figure 1 ou dans une fenêtre temporaire ouverte à cet effet. Au contraire, si tous les attributs sont déjà affichés, on passe directement à l'étape 314.

Cette étape 314 permet à l'utilisateur de sélectionner un de ces attributs. Il s'agit alors à l'étape 315 d'extraire de la base de données sous-jacente au modèle graphique les valeurs prises par les n-uplets contenus dans la table (relation) correspondant à l'entité courante dans la colonne correspondant à l'attribut sélectionné et de les afficher dans une fenêtre, par exemple du type à défilement (scrolling windows). Ceci relève de la gestion des bases de données et dépend du SGBDR mis en place. Une requête dans le langage du SGBDR, SQL par exemple, permettra de recouvrir ces données.

L'étape 316 autorise l'utilisateur à sélectionner tout ou une partie du domaine de cet attribut. Il peut soit cliquer sur les valeurs qui l'intéressent dans le cadre de son problème, soit entrer une condition numérique ou alphanumérique dans une boite de dialogue prévu à cet effet dans la fenêtre de sélection des valeurs. Des fonctions de sélection simples utilisant les opérateurs =, >, <, >=, <= sont permises afin de sélectionner un ensemble de réponses. Un exemple d'utilisation de ces fonctions sera explicité dans la suite de la description.

Une fois sélectionnées, ces valeurs, mémorisées, sont reportées en abscisse dans la feuille de calcul en création, dont l'état est constamment affiché dans une fenêtre de contrôle à l'aide d'une routine d'affichage. Ce report s'effectue de la façon suivante :

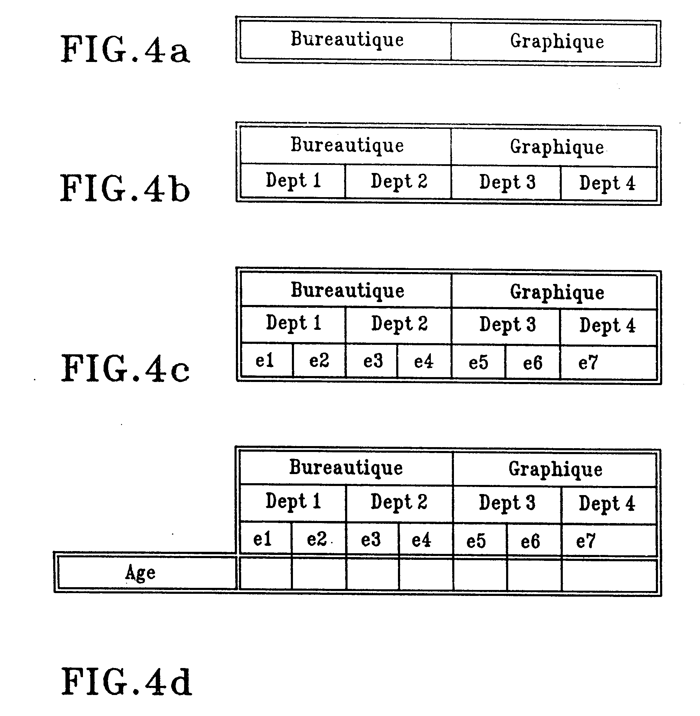

pour la racine, sur un premier niveau (voir Figure 4a)

pour les entités d'abscisse suivantes sur des niveaux inférieurs conformément à l'exemple Figure 4b à 4c.

La fenêtre de sélection des valeurs est alors refermée. De plus, l'attribut courant est retiré de la liste des attributs qu'il est possible de sélectionner : si cette liste est alors vide, on passe directement à l'étape 319.

Si, à l'étape 318, l'utilisateur décide de sélectionner un autre attribut, le procédé reprend à l'étape 314. Sinon, il lui faut encore choisir à l'étape 319 entre passer aux éléments à reporter en ordonnée, ou continuer la phase de détermination des abscisses. Dans le premier cas le procédé poursuit son déroulement à l'étape 330 où l'entité courante est désormais appelée la branche; dans le cas contraire on passe à l'étape 320.

A l'étape 320, la couleur de l'entité courante est modifiée pour visualiser la sélection et la fenêtre d'affichage de ses différents attributs est refermée. Dans le mode d'affichage où les attributs sont représentées sur le graphe, la couleur des attributs sélectionnés est modifiée de la même façon. De plus, les objets représentatifs des entités reliées à cette entité courante par des relations et non encore sélectionnés prennent une troisième teinte, afin d'indiquer clairement à l'utilisateur les choix disponibles. D'autres méthodes de marquage comme la mise en surbrillance, en inversion vidéo ou en mode clignotant permettent d'atteindre le même but. La sélection peut ensuite se poursuivre par un rebouclage à l'étape 311.

L'étape 330 conduit à l'étape 331 qui permet en bouclage avec l'étape 332 de sélectionner parmi les attributs restants de la branche ceux qui doivent figurer en ordonnée. Lorsque l'utilisateur a terminé cette sélection, les ordonnées de la feuille sont mémorisées puis complétées en conséquence à l'étape 332 dans la fenêtre de contrôle, comme à la Figure 4d. Les couleurs des objets du graphe sont alors modifiées comme à l'étape 320, la branche étant considérée comme entité courante.

Il est alors possible, soit de stopper la sélection et poursuivre par l'étape 339, soit de sélectionner une autre entité à l'étape 336. Dans le dernier cas, il est nécessaire de vérifier (étape 337) la validité de cette entité, la condition étant maintenant qu'elle soit reliée à la branche par une relation. Si l'entité est valide, ses attributs sont affichés à l'étape 338 comme au cours de l'étape 313, et on reboucle sur l'étape 331. Les noms des attributs sélectionnés à chaque tour sont disposés en ordonnée sur des niveaux hiérarchiques comme représenté par la séquence des Figure 4d à 4f. Si une entité n'est pas valide au cours de l'étape 337, cette entité est rejetée de la sélection et on reboucle sur l'étape 336.

Dans le cas où la définition des éléments constituants de la feuille de calcul est terminée, les valeurs des attributs des n-uplets des différentes entités sélectionnées répondant aux critères de sélection sont extraites de la base de données à l'étape 339 afin d'initialiser les cases cellules de la dite feuille de calcul. Plusieurs possibilités de sauvegarde et de conversion sont alors offertes à l'étape 340 pour permettre l'exploitation de cette feuille dans différents tableurs du commerce qui permettront d'ajouter d'autres cellules si nécessaire.

Un historique des sélections est constitué à chaque étape dans lequel toutes les sélections sont mémorisées. Celui-ci est sauvegardé avec la feuille créée. Ceci permet de revenir en arrière pas à pas à tout moment de la création d'une feuille sur des sélections faites et/ou de modifier une feuille déjà existante.

Le procédé va maintenant être décrit d'après un exemple basé sur le modèle et graphe de la Figure 1. L'utilisateur désire réaliser une étude des salaires, âges et compétences de certains employés travaillant dans des départements développant des produits de types bureautique et graphique.

Pour démarrer le procédé, il charge en mémoire le modèle correspondant à l'entreprise qu'il étudie. Ensuite, il désigne l'entité PRODUIT 10, qui devient alors la racine de la feuille. Conformément à l'étape 313, l'ensemble des attributs de cette entité, par exemple prod_nom 101, prod_type 102 et prod_ref 103 pour le nom, le type et le numéro de référence du produit, son affichés. L'utilisateur choisit l'attribut prod_type 102, et la liste des valeurs prises par cet attribut dans la relation sous-jacente de la base de données lui est alors proposée dans une autre fenêtre (étape 315). Il sélectionne alors les éléments qui l'intéressent, **bureautique** 220 et **graphique** 221 dans notre cas, et valide la sélection, provoquant la fermeture de cette fenêtre. Des méthodes de validation, par exemple à l'aide de boutons, sont bien connues dans l'art antérieur des interfaces utilisateurs.

Dès cette première étape de sélection, une fenêtre de contrôle, qui peut être mise sous forme d'icône, est ouverte et présente l'état de la feuille de calcul comme en Figure 4a. Cette fenêtre est mise à jour à chaque étape, et permet de vérifier immédiatement le résultat et donc de détecter des incohérences ou des erreurs. Dans le mode où un historique des sélections est conservé, elle permet aussi de visualiser les retours en arrière lors de corrections ou de modifications.

L'utilisateur termine la sélection des attributs à l'étape 318, mais décide à l'étape 319 de poursuivre celle des entités d'abscisse. A l'étape 320, la couleur de l'entité PRODUIT 10 est alors modifiée ainsi que celle des entités COMMANDE 16, FOURNISSEUR 17 et DEPT 11, liées à celle ci par des relations. La teinte de la première, PRODUIT 10, vise à la distinguer comme déjà sélectionnée, et celle des suivantes, différente, comme faisant partie des sélections possibles.

L'utilisateur clique alors sur l'entité DEPT 11, pour laquelle il choisit l'attribut dept# 110. Les numéros des départements réalisant des produits de type bureautique lui sont tout d'abord présentés, puis ceux des départements réalisant des produits de type graphique, parmi lesquels il sélectionne respectivement les département **#1** et **#2** puis **#3** et **#4.** La Figure 4b montre alors l'état de la fenêtre de contrôle. Après modification des couleurs des objets du graphe au cours de l'étape 320, on reboucle sur l'étape 311, les entités pouvant être sélectionnées étant alors EMPLOYE 12 et RESPONSABLE 18. Le choix est maintenant celui de l'entité EMPLOYE 12 et de son attribut <u>empl_nom</u> 121. L'utilisateur sélectionne les noms des employés qui l'intéressent parmi ceux travaillant dans les départements **#1, #2, #3** puis **#4,** qui lui sont proposés tour à tour d'après les informations stockées dans la base de données. Son choix porte alors respectivement sur **e1** et **e2, e3** et **e4, e5** et **e6** et enfin sur **e7,** ce qui est immédiatement transcrit dans la fenêtre de contrôle comme sur la Figure 4c.

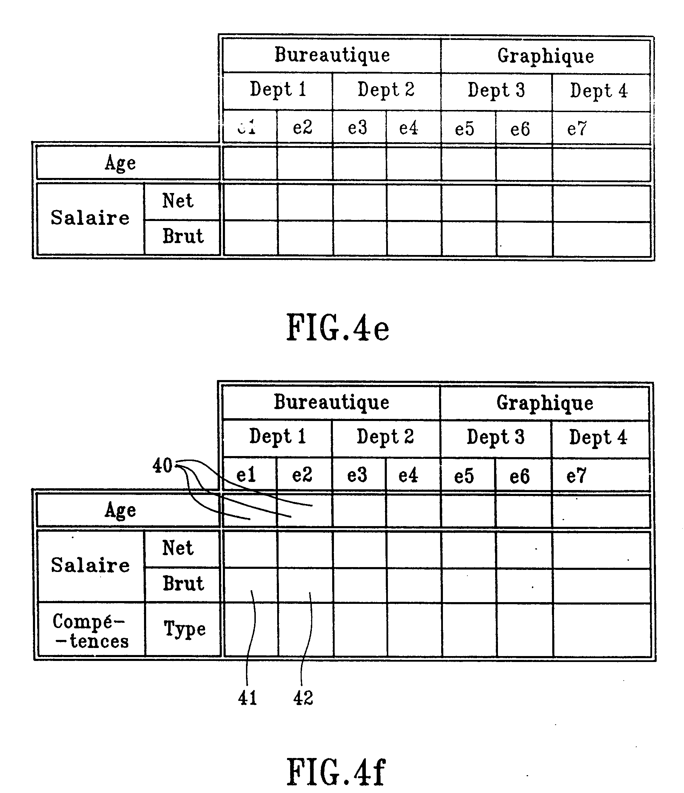

Arrivé au niveau des caractéristiques sur lesquelles porte l'étude, il choisit à l'étape 319 de reporter ces dernières en ordonnées. Il s'intéresse à l'âge, attribut **empl_âge** 122 (figure 1), de ces employés, attribut qu'il sélectionne donc à l'étape 331. Ce choix provoque à l'étape 333 une mise à jour reflétée dans la fenêtre de contrôle, comme sur la Figure 4d. Il sélectionne par l'étape 336 d'autres entités telles que l'entité SALAIRE 13 (figure 1) et ses deux attributs <u>sal_brut</u> 131 et <u>sal_net</u> 132, comme illustré par la Figure 4e. Pour finir, il sélectionne l'entité COMPETENCE 14 et son attribut <u>comp_type</u> 141, avec pour résultat la feuille de la Figure 4f. Il a alors tous les éléments voulus et peut décider à l'étape 335 de conclure les sélections. Les données correspondantes sont extraites de la base de données et permettent d'initialiser les cellules de cette feuille de calcul. Cette dernière peut être sauvegardée sous une forme propre ou bien être convertie au format d'un tableur du commerce pour exploitation.

Lors de la sélection des valeurs d'attributs à reporter en abscisse, étape 316, l'usage de fonctions dites de sélection est autorisé pour faciliter la procédure.

D'une façon générale, ces fonctions s'écrivent dans une boîte de dialogue prévue à cet effet dans la fenêtre de sélection des valeurs sous la forme :

attrib op val

où attrib est le nom d'un attribut de l'entité courante, op un opérateur parmi $=$, $<$, $>$, $<=$ et $>=$ et val une valeur constante. Dans le cas d'attributs de types numériques (entier, flottant), ces opérateurs ont leur sens mathématique; dans celui d'attributs du type alphanumérique, seul le signe $=$ est autorisé et correspond à l'égalité de chaînes, caractère par caractère. La valeur doit respecter le type de l'attribut auquel elle est comparée, des signes de troncation et de caractère de remplacement, par exemple les signes $+$ et $?$, étant permis dans les cas alphanumériques.

Les exemples suivants correspondent à des situations où l'utilisateur, dans notre exemple précédent s'intéresse à tous les employés dont l'âge est supérieur à 50 ans, ou dont le nom commence par les lettres "stan". Lorsque la fenêtre de sélection du nom des employés travaillant dans les différents départements est affichée, il entre :

empl_âge > 50 ou empl_nom = stan+

dans la boîte de dialogue prévue. Tous les noms des employés répondant au critère entré sont alors automatiquement sélectionnés.

Les SGBDR permettent en général de gérer un certain nombre de contraintes sur les données rangées dans la base. Certaines d'entre elles sont intrinsèques au modèle relationnel (l'unicité des clés primaires par exemple) et garantissent son intégrité; d'autres peuvent être définies par l'utilisateur pour modéliser les conditions réelles dans lesquelles évoluent les données de la base. Lors de la violation d'une de ces contraintes, plusieurs mesures sont possibles, par exemple l'affichage d'un message de mise en garde ou le rejet des données qui ont provoqué cette violation. Pour répondre à ce besoin, le modèle entité-relation a été étendu, de manière à faire apparaître l'existence de ces contraintes définies par l'utilisateur sur sa représentation graphique.

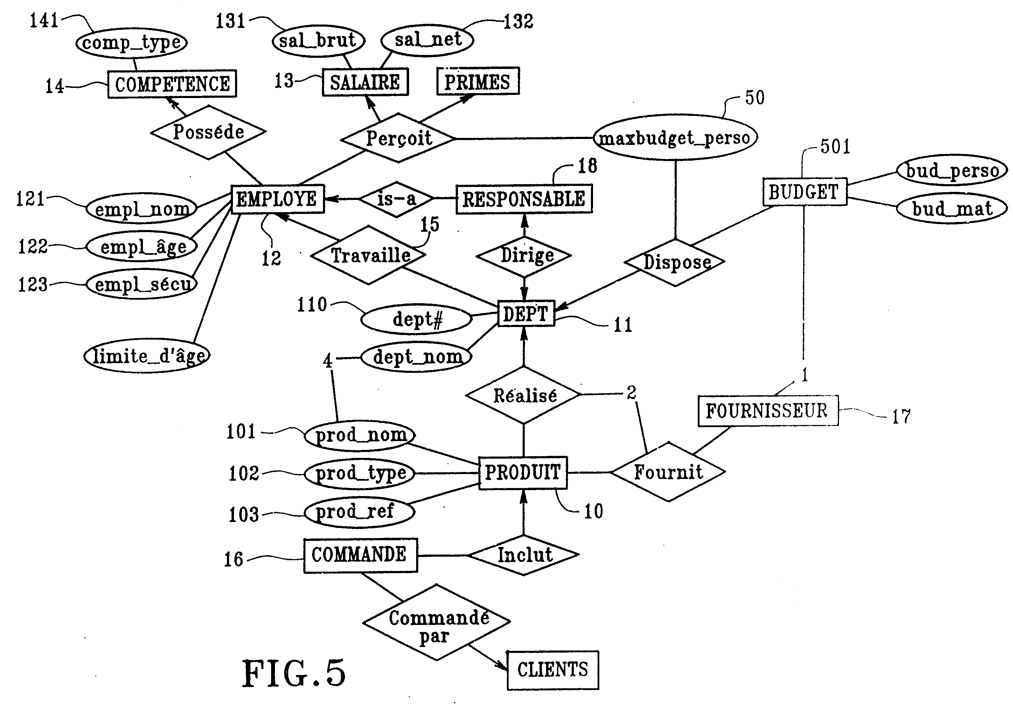

La Figure 5 montre l'exemple du modèle de l'entreprise de la Figure 1 auquel ont été ajoutées des contraintes de différents types, représentées par des ellipses noircies, et liées aux éléments entités, relations ou attributs auxquels elles se rapportent. La contrainte <u>**limite_d'âge**</u> 51 exprime le fait que l'âge d'un employé est nécessairement compris entre 16 et 65 ans. Elle rend possible la détection d'une incohérence éventuelle à ce niveau. L' entité BUDGET 501 dont des attributs sont par exemple <u>bud_perso</u>, <u>bud_mat</u>, etc... correspondant aux budgets personnel, matériel et autres et la relation Dispose 502 permettent d'introduire une contrainte **max_budget_perso** 50 plus globale liant cette même relation "Dispose" à la relation "Perçoit" et reflétant la limitation de la somme des perceptions de tous les employés d'un département particulier en fonction du budget de dépenses pour le personnel alloué à ce département.

Selon le procédé de l'invention, les contraintes liées à des entités ou des relations faisant partie de la sélection peuvent être associées à la feuille de calcul en création. Le programme précédemment décrit, supportant les actions de sélection, offre, en effet, à l'utilisateur exploitant un graphe contenant de telles relations de les incorporer dans ladite feuille. Pour ce faire, une série d'étapes supplémentaires, s'intégrant entre les étapes 339 et 340, permet d'afficher sur le graphe des objets représentatifs desdites contraintes concernant les éléments sélectionnés, puis de choisir celles d'entre elles qui doivent s'appliquer aux données de la feuille de calcul. Les expressions de ces contraintes et les données nécessaires à leur application sont mémorisées avec la structure et les données de cette feuille de calcul. Par la suite, elles sont converties dans la mesure du possible dans le langage du tableur utilisé pour s'appliquer selon le cas à des cellules isolées, à des lignes ou à des colonnes entières, voire à l'ensemble de la feuille de calcul.

Reprenant l'exemple illustré par les Figures 4a à 4f, si les contraintes **limite_d'âge** 51 et **max_budget_perso** 52 sont sélectionnées, elles sont alors incluses dans la feuille. La première s'applique cellule par cellule dans la ligne où l'âge des employés est reporté (référence 40, Figure 4f), la deuxième en revanche sur la ligne des salaires brut en considérant les employés désignés de chaque département. Il est clair que, en l'absence de certaines données, en l'occurrence celles de l'entité BUDGET mais aussi des salaires et primes de chacun des employés de chaque département concerné, cette contrainte est inapplicable dans un tableur n'ayant que la connaissance de la feuille crée. Deux solutions permettent de résoudre ce problème : la première consiste à extraire les données manquantes nécessaires et à les sauvegarder ensemble avec l'expression de la contrainte; une deuxième serait de prévoir l'interrogation de la base de données à chaque modification dans le tableur des données d'une cellule de la feuille concernée par une telle contrainte.

Cette deuxième solution, très coûteuse, est irréalisable dans la majeure partie des cas. Dans notre exemple, il est donc plus facile d'extraire les données de salaire et de prime de chacun des employés non désignés des départements #1 à #4, d'en faire la somme pour chacun de ces départements, d'extraire le montant du budget personnel de chacun de ces départements et d'associer aux cellules de la feuille des contraintes dérivées de la contrainte initiale **max_budget_perso** 52. Si par exemple on appelle budget#1 le budget alloué pour le personnel au département #1, et somme#1 la somme des salaires bruts et des primes perçus par les employés autres que e1 et e2 travaillant ce département, la contrainte

" <= budget#1 - somme#1 - (42)"

est associée à la cellule 41, et la contrainte

" <= budget#1 - somme#2 - (41)"

à la cellule 42. (41) et (42) désignent ici les valeurs contenues respectivement par les cellules 41 et 42.

L'invention utilise un système informatique, composé d'un écran, d'un clavier, d'un périphérique de pointage comme une souris, d'une unité centrale abritant au moins une mémoire et un ou plusieurs processeurs, et d'un ou plusieurs supports de mémoire de masse, par exemple des disques durs magnétiques ou des disques optiques, ledit système permettant l'exécution d'un programme de génération de feuilles de calcul selon le procédé décrit pour aider à la prise de décision.

Ce système comporte des moyens de stockage d'une base de données relationnelle contenant les informations relatives au domaine d'application décrit par un modèle entité-relation, et des moyens de représentation à l'écran du graphe entité-relation correspondant, ledit graphe incluant des objets représentatifs des entités, des relations, des contraintes qui leur sont liées et des arcs liant ces objets entre eux.

Il inclut par ailleurs des moyens d'interfaçage de ladite souris et dudit clavier permettant la sélection sur le graphe des entités et des relations décrivant les éléments à mettre en cause lors de l'étude pour une prise de décision.

La génération automatique de feuilles de calcul ayant une structure correspondantes aux entités et relations sélectionnée et associant à leurs cellules les contraintes présentes dans le modèle, conformément au procédé décrit est supporté de plus par des moyens de recouvrement des valeurs contenues dans la base de données. Des moyens de conversion des feuilles créées vers le format d'un tableur en vue de leur utilisation dans ce tableur permettent ensuite la présentation des données sous des formes diverses (camembert, courbes, histogrammes, ... ) et des simulations respectant les contraintes du modèle. L'intégration de tous ces éléments à des fins d'exploitation des données facilite donc, grâce au procédé de génération automatique de feuilles de calcul, la prévision de l'impact de décisions.

D'autres modifications à la portée de l'homme du métier font également partie de l'esprit de l'invention.

## Revendications

1. Procédé de génération automatique de feuilles de calcul à partir d'un modèle du type entité-relation servant de support à une base de données relationnelle, ledit modèle de base de données du type entité-relation étant visualisé sur un écran d'un système informatique sous la forme d'un graphe composé d'une pluralité d'entités et de relations représentées respectivement par de premier et de second types d'objets et reliées par des arcs, ce graphe étant matérialisé en mémoire par un ensemble de tables relationnelles, et caractérisé par le fait que:

    - une feuille de calcul est définie automatiquement par la sélection sur les différents types d'objets de ce graphe des éléments mémorisés pour être reportés sur la feuille de calcul et venir composer les données d'abscisse et d'ordonnées et le contenu des cellules ainsi formées.

2. Procédé selon la revendication 1, dans lequel la sélection des éléments composant une feuille de calcul est caractérisée par :

    - une première phase de sélection d'un premier ensemble d'entités tel que le chemin formé par ces entités et les relations les reliant ne comporte aucune boucle, une des extrémités de ce chemin étant désignée comme la racine et l'autre comme la branche,

    - une deuxième phase da sélection d'un second ensemble d'entités reliées par des relations à la branche,

    et en ce que,

    - pour chacune des entités du premier ensemble, lorsqu'elle est indiquée pour sélection, une liste de ses attributs est affichée, attributs parmi lesquels au moins un est sélectionné, et que pour chacun des attributs sélectionnés les valeurs desdits attributs, extraites de la base de données sont reportées en abscisse, sur des niveaux hiérarchiques correspondant à une arborescence entre les entités des abscisses,

et en ce que les attributs non sélectionnés de cette entité-branche et les attributs des entités du second ensemble sont reportés en ordonnées, sur des niveaux hiérarchiques correspondant à une arborescence entre les entités des ordonnées, et que les cellules ainsi formées sont initialisées avec les valeurs desdits attributs, extraites de la base de données.

3. Procédé selon la revendication 2, caractérisé en ce qu'il est possible de faire figurer sur le graphe les attributs des entités et relations le composant , sous la forme d'un troisième type d'objets, et de les sélectionner directement.

4. Procédé selon la revendication 2, caractérisé en ce que le domaine des valeurs prises par les attributs et à reporter en abscisse peut être limité, par des choix ponctuels ou par des fonctions de limitation, et que de la même façon, l'utilisateur peut sélectionner un nombre d'attributs à reporter en ordonnées, parmi l'ensemble des attributs de la branche et de ceux des entités reliées par des relations à ladite branche.

5. Procédé selon la revendication 2, caractérisé en ce que tous les objets formant le graphe sont au départ affichés dans une première couleur, puis qu'au cours de la sélection les objets sélectionnés sont affichés dans une seconde couleur.

6. Procédé selon la revendication 5, caractérisé en ce que à tout moment des phases de sélection, les objets à même d'être sélectionnés sont affichés dans une troisième couleur.

7. Procédé selon une des revendications 5 ou 6, caractérisé en ce que lesdites couleurs peuvent être remplacées par des variations de brillance ou des fréquences de clignotement.

8. Procédé selon une des revendications 1 à 7, caractérisé par la constitution d'un historique des sélections contenant chacune des étapes de sélection et permettant de revenir en arrière pas à pas sur ces sélections.

9. Procédé selon la revendication 2, dans lequel la sélection est caractérisée par le fait qu'elle comporte une étape de validation de l'entité courante sélectionnée pour vérifier :

- durant la première phase, si une relation relie sur le graphe cette entité à l'entité précédemment sélectionnée, et

- dans la seconde phase, si une relation relie sur le graphe cette entité à la branche,

ces relations étant matérialisées en mémoire par des tables qui permettent d'effectuer, au niveau du SGBDR, la jointure des tables correspondant à ces entités.

10. Procédé selon la revendication 1, caractérisé par le fait que ledit modèle inclut l'expression de contraintes auxquelles obéissent les différentes entités et relations le composant et que les contraintes associées aux entités et relations sélectionnées sont automatiquement liées aux cellules des feuilles de calcul ainsi générées.

11. Procédé selon une des revendications précédentes, caractérisé par le fait que ledit modèle est un modèle d'entreprise.

12. Dispositif d'aide à la prise de décision à partir d'un modèle d'un domaine d'application sous une forme de graphe entité-relation contenant des entités, des relations et des contraintes qui leur sont liées comportant :

- des moyens de stockage d'une base de données décrite par ce modèle et contenant les informations correspondantes au dit domaine d'application,

- des moyens de représentation graphique à l'écran dudit graphe entité-relation, incluant des objets représentatifs des entités, des relations, des contraintes qui leur sont liées et des arcs liant ces objets entre eux,

et caractérisé par :

- des moyens d'interfaçage permettant la sélection sur le graphe des entités et des relations décrivant les éléments à mettre en cause lors de l'étude pour une prise de décision,

- des moyens de génération automatique de feuilles de calcul ayant une structure correspondant aux entités et relations sélectionnées et associant à leurs cellules les contraintes présentes dans le modèle,

- des moyens de recouvrement des valeurs contenues dans la base de données et correspondant aux éléments sélectionnés pour initialiser lesdites feuilles.

**13.** Dispositif d'aide à la prise de décision selon la revendication 12 caractérisé en ce qu'il comporte en outre des moyens de conversion des feuilles créées vers le format d'un tableur en vue de leur utilisation dans ce tableur permettant la présentation des données sous forme de graphiques et des simulations respectant les contraintes, à des fins d'exploitation des données et de prévision de l'impact des décisions.

FIG.1

EP 0 690 394 A1

DEPT

201

| dept# | nom_dept |
|-------|----------|
| 2 | image1 |
| 3 | CAO1 |
| 1 | clavier |
| 4 | moniteur |
| . . . | . . . |

21

22 EMPLOYE

201

| empl_nom | empl_âge | empl_secu |
|----------|----------|-----------|
| e1 | 38 | 54231632 |
| e7 | 27 | 65782391 |
| . . . | . . . | . . . |

202

TRAVAILLE

201

| empl_nom | dept# |
|----------|-------|
| e1 | 1 |
| e7 | 4 |
| . . . | . . . |

23

24 PRODUIT

201

| prod_nom | prod_réf | prod_type |
|----------|----------|-----------|
| BUROTIC | 2A63 | bureautique |
| GRAFIC | 3ZX40 | graphique |
| . . . | . . . | . . . |

220

221

# FIG.2

Initialisation
Chargement et ─── 310
Affichage du graphe

Sélection
entité ─── 311

non ←── valide ? ─── 312

oui

Affichage
Attribut ─── 313

sélection
Attribut? ─── 314

extraction +
affichage valeurs ─── 315

sélection
valeurs ─── 316

Mise à jour
Abscisse ─── 317

318
autre
Attribut ──oui──→

non ─── 319

Passage ──oui──→ Ⓐ
aux ordonnés
330

non

Modification
couleurs ─── 320

FIG.3a

Ⓐ ─── 330

Sélection
Attribut ─── 331

autre
Attribut ─── 332

non

Mise à jour
Ordonnées ─── 333

Modification
couleurs ─── 334

339
stop ? ─── 335 ──→ extraction
Mise à jour
cellules

336
Sélection
entité

non ←── valide

337

Affichage
Attribut ─── 338

conversion
sauvegarde
exploitation
─── 340

FIG.3b

FIG.4a

| Bureautique | Graphique |
|---|---|

FIG.4b

| Bureautique | | Graphique | |
|---|---|---|---|
| Dept 1 | Dept 2 | Dept 3 | Dept 4 |

FIG.4c

| Bureautique | | | | Graphique | | |
|---|---|---|---|---|---|---|
| Dept 1 | | Dept 2 | | Dept 3 | | Dept 4 |
| e1 | e2 | e3 | e4 | e5 | e6 | e7 |

| | Bureautique | | | | Graphique | | |
|---|---|---|---|---|---|---|---|
| | Dept 1 | | Dept 2 | | Dept 3 | | Dept 4 |
| | e1 | e2 | e3 | e4 | e5 | e6 | e7 |
| Age | | | | | | | |

FIG.4d

| | Bureautique | | | | Graphique | | |
|---|---|---|---|---|---|---|---|
| | Dept 1 | | Dept 2 | | Dept 3 | | Dept 4 |
| | e1 | e2 | e3 | e4 | e5 | e6 | e7 |
| Age | | | | | | | |
| Salaire / Net | | | | | | | |
| Salaire / Brut | | | | | | | |

## FIG.4e

| | Bureautique | | | | Graphique | | |
|---|---|---|---|---|---|---|---|
| | Dept 1 | | Dept 2 | | Dept 3 | | Dept 4 |
| 40 | e1 | e2 | e3 | e4 | e5 | e6 | e7 |
| Age | | | | | | | |
| Salaire / Net | | | | | | | |
| Salaire / Brut | | | | | | | |
| Compé-tences / Type | | | | | | | |

41    42

## FIG.4f

FIG.5

EP 0 690 394 A1

**Office européen des brevets**

# RAPPORT DE RECHERCHE EUROPEENNE

Numero de la demande

EP 95 40 1530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | COMPUTER, vol. 23, no. 3, Mars 1990 LONG BEACH US, pages 26-36, XP 000104433 B. CZEJDO ET AL 'A Graphical Data Manipulation Language for an Extended Entity-Relationship Model' * le document en entier * --- | 1 | G06F17/30 G06F17/60 |
| Y | WO-A-91 12582 (H.P.) * page 1, ligne 2 - page 2, ligne 23; revendications * --- | 1 | |
| A | IBM TECHNICAL DISCLOSURE BULLETIN, vol. 33, no. 9, Février 1991 ARMONK, US, pages 238-242, XP 000109476 'Visual Representation of Database Query' * le document en entier * --- | 1-13 | |
| A | THE COMPUTER JOURNAL, vol. 33, no. 1, Février 1990 CAMBRIDGE, GB, pages 31-39, XP 000140529 M. AZMOODEH 'BRMQ: A Database Interface Facility based on Graph Traversals and Extended Relationships on Groups of Entities' * le document en entier * --- | 1-13 | **DOMAINES TECHNIQUES RECHERCHES (Int.Cl.6)** G06F |
| A | PROCEEDINGS OF THE INTERNATIONAL CONFERENCE ON DATABASE AND EXPERT SYSTEMS APPLICATIONS - DEXA 91, Août 1991 SPRINGER-VERLAG, WIEN, AUSTRIA, pages 525-530, A. CAMPIOLI ET AL 'Spreadviews' * le document en entier * --- -/-- | 1-13 | |

Le présent rapport a été établi pour toutes les revendications

| Lieu de la recherche | Date d'achèvement de la recherche | Examinateur |
|---|---|---|
| LA HAYE | 6 Septembre 1995 | Pottiez, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

Office européen
des brevets

**RAPPORT DE RECHERCHE EUROPEENNE**

Numero de la demande

EP 95 40 1530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 018 no. 312 (P-1754) ,14 Juin 1994 & JP-A-06 068032 (TOSHIBA) 11 Mars 1994, * abrégé * | 1 | |
| | ----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 6 Septembre 1995 | Pottiez, M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)